# EUROPEAN PATENT APPLICATION

(11) **EP 4 429 177 A1**
(43) Date of publication of application: **11.09.2024**
(21) Application number: 22903348.5
(22) Date of filing: 05.12.2022
(51) Int. Cl.: H04L 12/28, H04W 88/16

(54) **METHOD, DEVICE, AND SYSTEM FOR CONTROLLING USER TO ACCESS NETWORK**

(30) Priority: 06.12.2021 CN 202111479132
(71) Applicant: Huawei Technologies Co., Ltd., Shenzhen, Guangdong 518129 (CN)
(72) Inventor: PENG, Tao, Shenzhen, Guangdong 518129 (CN); YU, Zhouyi, Shenzhen, Guangdong 518129 (CN); HUA, Rongrong, Shenzhen, Guangdong 518129 (CN); JIANG, Wei, Shenzhen, Guangdong 518129 (CN)
(74) Representative: Pfenning, Meinig & Partner mbB
(86) International application number: PCT/CN2022/136434
(87) International publication number: WO 2023/103926

(57) **Abstract**

This application discloses a method for controlling subscriber access to a network, a device, and a system. A control plane device receives a first access request packet of a first subscriber, determines, based on a first correspondence, a first household to which the first subscriber belongs, then determines a first user plane device based on a second correspondence, and indicates the first subscriber to access the network through the first user plane device. The control plane device allocates, to a same user plane device, a subscriber who belongs to a same household and who accesses the network, so that the same user plane device provides a broadband network access service for the subscriber who belongs to the same household and who accesses the network. In this way, unified management may be performed through one user plane device on a plurality of subscribers who belong to a same household and who access the network, a process of managing the plurality of subscribers who belong to the same household and who access the network may be simplified, and efficiency of managing the plurality of subscribers who belong to the same household and who access the network may be improved.

## Description

This application claims priority to Chinese Patent Application No. 202111479132.3, filed with the China National Intellectual Property Administration on December 6, 2021 and entitled "METHOD FOR CONTROLLING SUBSCRIBER ACCESS TO NETWORK, DEVICE, AND SYSTEM", which is incorporated herein by reference in its entirety.

### TECHNICAL FIELD

This application relates to the communication field, and in particular, to a method for controlling subscriber access to a network, a device, and a system.

### BACKGROUND

A BNG (Broadband Network Gateway, broadband network gateway) is a network device that provides a broadband network access service for a subscriber. The subscriber interacts with a broadband network server through the BNG, to implement services, for example, subscriber authentication, online accounting, and traffic management. Based on an SDN (Software Defined Network, software defined network) technology and an NFV (Network Functions Virtualization, network functions virtualization) technology, a control function of the BNG and a forwarding function of the BNG can be decoupled. The control function of the BNG may be implemented by a CP (Control Plane, control plane) device, and the forwarding function may be implemented by a UP (User Plane, user plane) device. The control plane device may control a plurality of user plane devices, allocate, to the user plane device, a subscriber for whom a network access service needs to be provided, implement resource scheduling between user plane devices, and the like.

In a process in which the subscriber accesses the broadband network, the control plane device obtains a network access request of the subscriber through the user plane device, and sends a subscriber authentication request message to the broadband network server based on the network access request. After subscriber authentication succeeds, the control plane device allocates, to the subscriber, a user plane device that provides a broadband access service. Through the allocated user plane device, the subscriber may access the broadband network, and interact with a network device in the broadband network.

Currently, user plane devices that provide the network access service for different subscribers belonging to a same household may be different. In other words, different subscribers in a same household may access a network through different UP devices. As a result, it is difficult to perform unified management on a plurality of subscribers belonging to the same household, a management process is complex, and management efficiency is low.

### SUMMARY

Embodiments of this application provide a method for controlling subscriber access to a network, a device, and a system, so that a same user plane device can be used for providing a network access service for a plurality of subscribers belonging to a same household, to perform unified management on the plurality of subscribers who belong to the same household and who access the network, simplify a process of managing the plurality of subscribers who belong to the same household and who access the network, and improve efficiency of managing the plurality of subscribers that belong to the same household and access the network.

In view of this, the technical solutions provided in embodiments of this application are as follows:

According to a first aspect, an embodiment of this application provides a method for controlling subscriber access to a network. A BNG system in the network includes a control plane device and at least two user plane devices. The method is applied to the control plane device in the BNG system, configured to determine a user plane device that provides a network access service for a first subscriber. When performing the method for controlling subscriber access to a network provided in this embodiment of this application, the control plane device first receives a first access request packet of the first subscriber. The control plane device can determine, based on a correspondence that is between the first subscriber and a first household and that is included in a first correspondence, the first household to which the first subscriber belongs. The control plane device determines a first user plane device based on a correspondence that is between the first household and the first user plane device and that is included in a second correspondence. The first user plane device is a user plane device in the BNG system. The first user plane device is configured to provide the network access service for the first subscriber. The control plane device indicates the first subscriber to access the network through the first user plane device. The control plane device determines, based on the first household to which the first subscriber belongs, the first user plane device that provides the access network service for the first household, and further specifies that the first user plane device provides the access network service for the first subscriber. In this way, a subscriber that belongs to the first household can be allocated to the first user plane device, so that the subscriber belonging to the first household accesses the network through the first user plane device, so that unified management is performed, through the first user plane device, on a subscriber who belongs to the first household and who accesses the network. Compared with a conventional technology, one user plane device is used for managing different subscribers belonging to a same household, to simplify a management process and improve management efficiency.

In some possible implementations, before the control plane device receives the first access request packet of the first subscriber, the control plane device obtains, based on a second subscriber, that is, a subscriber who belongs to the first household and who first accesses the network, the second correspondence. In other words, when the subscriber in the first household accesses the network for the first time, the first user plane device is allocated to the first household, and the correspondence between the first household and the first user plane device is established, so that when another subscriber in the first household subsequently accesses the network, the access network service is provided through the first user plane device.

In some possible implementations, the control plane device receives the second access request packet of the second subscriber. The control plane device can determine, based on a correspondence that is between the second subscriber and the second household and that is included in a third correspondence, the first household to which the second subscriber belongs. Further, the control plane device determines, from a first candidate user plane device set, the first user plane device that provides the network access service for the subscriber in the first household. The first candidate user plane device set includes at least one user plane device in the BNG system. After determining the first user plane device, the control plane device can generate the second correspondence. The second correspondence includes the correspondence between the first household and the first user plane device.

In some possible implementations, load statuses of user plane devices included in the first candidate user plane device set are different. The control plane device obtains a load parameter of the first user plane device, and determines the first user plane device from the first candidate user plane device set based on the load parameter of the first user plane device. In other words, the control plane device selects corresponding user plane devices for different households based on the load statuses of different user plane devices.

In some possible implementations, the control plane device can allocate different user plane devices to subscribers belonging to different households. The control plane device can further receive a third access request packet of a third subscriber, and determine, based on a correspondence that is between the third subscriber and the second household and that is included in a fourth correspondence, a second household to which the third subscriber belongs. The third subscriber is a subscriber who belongs to the second household and who first accesses the network. The control plane device determines, from a second candidate user plane device set, a second user plane device that provides the network access service for a subscriber belonging to the second household. The second candidate user plane device set includes at least one user plane device in the BNG system. After determining the second user plane device, the control plane device indicates the third subscriber to access the network through the second user plane device. In other words, when determining that the subscriber in the second household accesses the network for the first time, the control plane device allocates the second user plane device to the second household. The second user plane device may be different from a first user plane device corresponding to the first household, to separately manage different households.

In some possible implementations, after determining the second user plane device, the control plane device establishes a fifth correspondence. The fifth correspondence includes a correspondence between the second household and the second user plane device. The control plane device can determine, based on the fifth correspondence, the second user plane device that provides the network access service for a subscriber who belongs to the second household and who does not first access the network. Similar to a process in which the subscriber in the first household accesses the network, when another subscriber in the second household subsequently accesses the network, the access network service is provided through the second user plane device.

In some possible implementations, the first correspondence including the correspondence between the first subscriber and the first household may be obtained by the control plane device based on a configuration. Alternatively, the first correspondence may be obtained by the control plane device from an authentication server.

In some possible implementations, the first access request packet includes a subscriber name. The subscriber name identifies the first subscriber. The control plane device can determine the first subscriber based on a subscriber included in the first access request packet.

In some possible implementations, the first access request packet includes an access address of the first subscriber. The control plane device can determine the first subscriber based on the access address of the first subscriber in the first access request packet.

In some possible implementations, before receiving the first access request packet of the first subscriber, the control plane device may first determine the first correspondence based on an obtained fourth access request packet of the first subscriber. After obtaining the fourth access request packet, the control plane device determines a preselected user plane device. The preselected user plane device is one of the at least two user plane devices in the BNG system. The control plane device obtains a subscriber name of the first subscriber through preselected user plane device, and obtains, from the authentication server based on the subscriber name of the first subscriber, the first household to which the first subscriber belongs. After determining the first household to which the first subscriber belongs, the control plane device can determine the first user plane device based on the second correspondence. If the first user plane device is different from the preselected user plane device, the control plane device indicates the first subscriber to go offline. When the first subscriber needs to access the network, the first subscriber sends the first access request packet to the control plane device. The control plane device can determine the first household based on the determined first correspondence, and then determine the first user plane device based on the second correspondence.

In some possible implementations, the control plane device may adjust a user plane device corresponding to the first household. If the first user plane device meets a preset handover condition, the control plane device determines a third user plane device as a user plane device that provides the network access service for the subscriber who belongs to the first household and who accesses the network. The third user plane device is a device different from the first user plane device. The third user plane device and the control plane device belong to a same BNG system. The control plane device adjusts the second correspondence. An adjusted second correspondence includes a correspondence between the first household and the third user plane device. The control plane device can indicate, based on the adjusted second correspondence, the subscriber in the first household to access the network through the third user plane device.

In some possible implementations, the control plane device stores a household information table. The household information table includes one item or more items of the first correspondence and the second correspondence.

In some possible implementations, if the subscriber who belongs to the first household and who accesses the network has gone offline, the control plane device deletes the second correspondence. In this way, the control plane device can save storage space, and can reallocate a corresponding user plane device to the first household when the subscriber belonging to the first household accesses the network again.

According to a second aspect, an embodiment of this application provides an apparatus for controlling subscriber access to a network. The apparatus is applied to a control plane device. The control plane device belongs to a BNG system in a network, and the BNG system further includes at least two user plane devices. The apparatus includes the following units.

A receiving unit is configured to receive a first access request packet of a first subscriber.

A processing unit is configured to: determine, based on a first correspondence, a first household to which the first subscriber belongs, where the first correspondence includes a correspondence between the first subscriber and the first household; determine a first user plane device based on a second correspondence, where the second correspondence includes a correspondence between the first household and the first user plane device, and the first user plane device is one of the at least two user plane devices in the BNG system; and indicate the first subscriber to access the network through the first user plane device.

In some possible implementations, the processing unit is further configured to obtain the second correspondence based on a second subscriber. The second subscriber is a subscriber who belongs to the first household and who first accesses the network.

In some possible implementations, the receiving unit is further configured to receive a second access request packet of the second subscriber.

The processing unit is further configured to: determine, based on a third correspondence, the first household to which the second subscriber belongs, where the third correspondence includes a correspondence between the second subscriber and the first household; determine the first user plane device from a first candidate user plane device set, where the first candidate user plane device set includes at least one user plane device in the BNG system; and generate the second correspondence based on the first household and the first user plane device.

In some possible implementations, the processing unit is configured to determine the first user plane device from the first candidate user plane device set based on a load parameter of the first user plane device.

In some possible implementations, the receiving unit is further configured to receive a third access request packet of a third subscriber.

The processing unit is further configured to: determine, based on a fourth correspondence, a second household to which the third subscriber belongs, where the fourth correspondence includes a correspondence between the third subscriber and the second household, and the third subscriber is a subscriber who belongs to the second household and who first accesses the network; determine a second user plane device from a second candidate user plane device set, where the second candidate user plane device set includes at least one user plane device in the BNG system; and indicate the third subscriber to access the network through the second user plane device.

In some possible implementations, the processing unit is further configured to establish a fifth correspondence based on the second household and the second user plane device. The fifth correspondence includes a correspondence between the second household and the second user plane device. The fifth correspondence is used for determining a user plane device that provides a network access service for a subscriber who belongs to the second household and who does not first access the network.

In some possible implementations, the first correspondence is obtained by the control plane device based on the configuration, or the first correspondence is obtained by the control plane device from an authentication server.

In some possible implementations, the first subscriber is determined based on a subscriber name included in the first access request packet, and the subscriber name identifies the first subscriber.

In some possible implementations, the first subscriber is determined based on an access address of the first subscriber included in the first access request packet.

In some possible implementations, the receiving unit is further configured to receive a fourth access request packet of the first subscriber.

The processing unit is further configured to: obtain the subscriber name of the first subscriber through a preselected user plane device, where the preselected user plane device is one of the at least two user plane devices in the BNG system; obtain, from the authentication server based on the subscriber name, the first household to which the first subscriber belongs; determine the first user plane device based on the second correspondence; and in response to the fact that the first user plane device and the preselected user plane device are different user plane devices, indicate the first subscriber to go offline.

In some possible implementations, the processing unit is further configured to: in response to the fact that the first user plane device meets a preset handover condition, adjust the second correspondence, where an adjusted second correspondence includes a correspondence between the first household and a third user plane device, and the third user plane device is different from the first user plane device; indicate, based on the adjusted second correspondence, a subscriber in the first household to access the network through the third user plane device.

In some possible implementations, the processing unit is further configured to store a household information table. The household information table includes the first correspondence and/or the second correspondence.

In some possible implementations, the processing unit is further configured to: in response to the fact that all subscribers who belong to the first household and who access the network go offline, delete the second correspondence.

According to a third aspect, an embodiment of this application provides a system for controlling subscriber access to a network. The system includes a control plane device and a first user plane device. The control plane device and the first user plane device belong to a same BNG system.

The control plane device is configured to: receive a first access request packet of a first subscriber; determine, based on a first correspondence, a first household to which the first subscriber belongs; determine, based on a second correspondence, the first user plane device; and indicate the first subscriber to access the network through the first user plane device. The first correspondence includes a correspondence between the first subscriber and the first household. The second correspondence includes a correspondence between the first household and the first user plane device.

The first user plane device is configured to enable the first subscriber to access the network.

In some possible implementations, the control plane device is further configured to obtain the second correspondence based on a second subscriber. The second subscriber is a subscriber who belongs to the first household and who first accesses the network.

In some possible implementations, the control plane device is further configured to: receive a second access request packet of the second subscriber; determine, based on a third correspondence, the first household to which the second subscriber belongs, where the third correspondence includes a correspondence between the second subscriber and the first household; determine the first user plane device from a first candidate user plane device set, where the first candidate user plane device set includes at least one user plane device in the BNG system; and generate the second correspondence based on the first household and the first user plane device.

In some possible implementations, the control plane device is configured to determine the first user plane device from the first candidate user plane device set based on a load parameter of the first user plane device.

In some possible implementations, the system further includes a second user plane device. The second user plane device and the control plane device belong to a same BNG system.

The control plane device is further configured to: receive a third access request packet of a third subscriber; determine, based on a fourth correspondence, a second household to which the third subscriber belongs, where the fourth correspondence includes a correspondence between the third subscriber and the second household, and the third subscriber is a subscriber who belongs to the second household and who first accesses the network; determine a second user plane device from a second candidate user plane device set, where the second candidate user plane device set includes at least one user plane device in the BNG system; and indicate the third subscriber to access the network through the second user plane device.

The second user plane device is configured to enable the third subscriber to access the network.

In some possible implementations, the control plane device is further configured to establish a fifth correspondence based on the second household and the second user plane device. The fifth correspondence includes a correspondence between the second household and the second user plane device. The fifth correspondence is used for determining a user plane device that provides a network access service for a subscriber who belongs to the second household and who does not first access the network.

In some possible implementations, the first correspondence is obtained by the control plane device based on the configuration, or the first correspondence is obtained by the control plane device from an authentication server.

In some possible implementations, the first subscriber is determined based on a subscriber name included in the first access request packet, and the subscriber name identifies the first subscriber.

In some possible implementations, the first subscriber is determined based on an access address of the first subscriber included in the first access request packet.

In some possible implementations, the control plane device is further configured to: obtain a fourth access request packet of the first subscriber; obtain the subscriber name of the first subscriber through a preselected user plane device, where the preselected user plane device is one of at least two user plane devices in the BNG system; and obtain, from the authentication server based on the subscriber name, the first household to which the first subscriber belongs; determine the first user plane device based on the second correspondence; and in response to the fact that the first user plane device and the preselected user plane device are different user plane devices, indicate the first subscriber to go offline.

In some possible implementations, the system further includes a third user plane device. The third user plane device and the control plane device belong to a same BNG system.

The control plane device is further configured to: in response to the fact that the first user plane device meets a preset handover condition, adjust the second correspondence, where an adjusted second correspondence includes a correspondence between the first household and the third user plane device, and the third user plane device is different from the first user plane device; and indicate, based on the adjusted second correspondence, a subscriber in the first household to access the network through the third user plane device.

The third user plane device is configured to enable the first subscriber to access the network.

In some possible implementations, the control plane device is further configured to store a household information table. The household information table includes the first correspondence and/or the second correspondence.

In some possible implementations, the control plane device is further configured to: in response to the fact that all subscribers who belong to the first household and who access the network go offline, delete the second correspondence.

According to a fourth aspect, an embodiment of this application provides a control plane device. The control plane device includes a processor chip and a memory. The memory is configured to store instructions or program code. The processor chip is configured to invoke the instructions or the program code from the memory and run the instructions or the program code, to perform the method for controlling subscriber access to a network according to the first aspect.

According to a fifth aspect, an embodiment of this application provides a network system. The network system includes the control plane device according to the fourth aspect.

According to a sixth aspect, an embodiment of this application provides a computer-readable storage medium, including instructions, a program, or code. When the instructions, the program, or the code is executed on a computer, the computer is enabled to perform the method for controlling subscriber access to a network according to the first aspect.

According to a seventh aspect, an embodiment of this application provides a computer program product. When the computer program product runs on a network device, the network device is enabled to perform the method for controlling subscriber access to a network according to the first aspect.

### BRIEF DESCRIPTION OF DRAWINGS

FIG. 1 is a schematic diagram of allocating, a control plane device, a user plane device to a subscriber that requests to access a network according to an embodiment of this application;
FIG. 2 is a schematic diagram of accessing a broadband network by a conventional household subscriber according to an embodiment of this application;
FIG. 3 is a schematic diagram of an architecture of a system according to an embodiment of this application;
FIG. 4 is a schematic flowchart of a method for controlling subscriber access to a network according to an embodiment of this application;
FIG. 5 is another schematic flowchart of a method for controlling subscriber access to a network according to an embodiment of this application;
FIG. 6 is an interaction signaling diagram of a method for controlling subscriber access to a network according to an embodiment of this application;
FIG. 7 is another interaction signaling diagram of a method for controlling subscriber access to a network according to an embodiment of this application;
FIG. 8 is still another interaction signaling diagram of a method for controlling subscriber access to a network according to an embodiment of this application;
FIG. 9 is a schematic flowchart of a structure of an apparatus for controlling subscriber access to a network according to an embodiment of this application;
FIG. 10 is a schematic flowchart of a structure of a system for controlling subscriber access to a network according to an embodiment of this application;
FIG. 11 is a schematic diagram of a structure of a control plane device according to an embodiment of this application; and
FIG. 12 is a schematic diagram of a structure of a device according to an embodiment of this application.

### DESCRIPTION OF EMBODIMENTS

In a broadband network, a plurality of BNG systems may be included. The BNG system provides a broadband network access service for a plurality of subscribers. The BNG system may include one control plane device and at least two user plane devices. The control plane device has a control function, and can allocate, to the user plane device, a subscriber responsible for accessing the broadband network and schedule resources between a plurality of user plane devices. The user plane device may provide the broadband network access service for the subscriber.

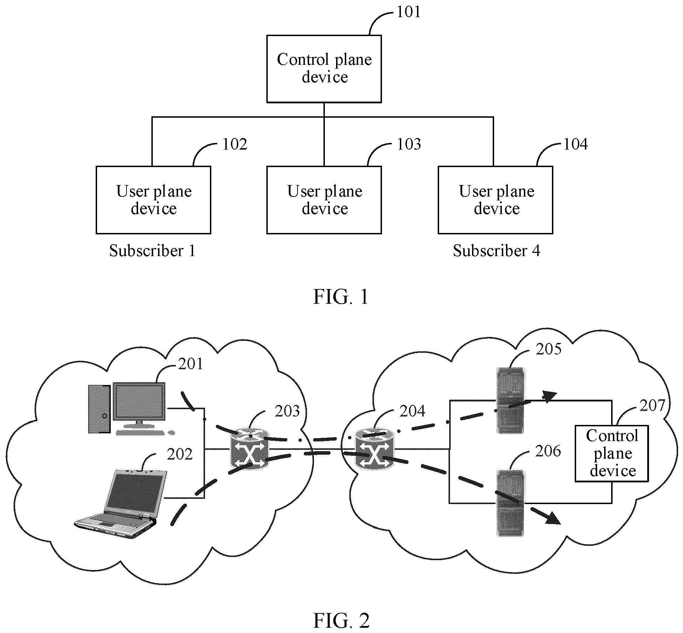

FIG. 1 is a schematic diagram of allocating, by a control plane device, a user plane device to a subscriber that requests to access a network according to an embodiment of this application. A control plane device 101 may control a user plane device 102, a user plane device 103, and a user plane device 104. The control plane device 101 may obtain an access request packet of a subscriber 1 and an access request packet of a subscriber 2 through the user plane device 102, the user plane device 103, and the user plane device 104. The access request packet of the subscriber 1 and the access request packet of the subscriber 2 may be sent to each user plane device through an OLT (Optical Line Termination, optical line termination) and a switch. The control plane device 101 determines, based on load statuses of the user plane device 102, the user plane device 103, and the user plane device 104, that the user plane device 102 provides a network access service for the subscriber 1, and determines that the user plane device 104 provides the network access service for the subscriber 2.

It can be learned from the foregoing process in which the control plane device allocates the user plane device to the subscriber that requests to access the network that when managing the user plane devices, the control plane device allocates, based only on the load statuses of the user plane devices, the user plane device that provides the network access service for the subscriber. In a household network scenario, each household may include a plurality of household subscribers. When the plurality of household subscribers access a broadband network, the network access service may be provided by different user plane devices. FIG. 2 is a schematic diagram of accessing a broadband network by a conventional household subscriber according to an embodiment of this application. A subscriber A logs in through a terminal device 201, and a subscriber B logs in through a terminal device 202. The subscriber A and the subscriber B belong to a same household. The terminal device 201 and the terminal device 202 are respectively connected to a user plane device 205 and a user plane device 206 in a BNG system by using an RGW (Residential Gateway, residential gateway) 203 and a switch 204. The BNG system alternatively includes a control plane device 207. The user plane device 205 and the user plane device 206 may be user plane devices implemented based on an architecture of an SDN technology and an architecture of an NFV technology. The user plane device 205 and the user plane device 206 are configured to implement a forwarding function of a BNG. The user plane device 205 and the user plane device 206 may be vBNG (virtual broadband network gateway, virtual broadband network gateway)-UP devices. The user plane device 205 and the user plane device 206 may also be pBNG (physical broadband network gateway, physical broadband network gateway)-UP devices. The control plane device 207 may be a control plane device implemented based on the architecture of the SDN technology and the architecture of the NFV technology. The control plane device 207 is configured to implement a control function of the BNG. The control plane device 207 is configured to manage the user plane device 205 and the user plane device 206. The control plane device 207 may be a vBNG-CP device. After obtaining access requests of the subscriber A and the subscriber B through the user plane device 205 and/or the user plane device 206, the control plane device 207 determines that the subscriber A accesses a network through the user plane device 205 and that the subscriber B accesses the network through the user plane device 206. The subscriber A accesses the network through the allocated user plane device 205, and the subscriber B accesses the network through the allocated user plane device 206. When the subscriber A and the subscriber B that belong to the same household are managed, network resource usage information of the subscriber A needs to be first obtained through the user plane device 205, and network resource usage information of the subscriber B needs to be obtained through the user plane device 206. Network resource usage information, for example, may be online duration or a network speed. Then, statistics on the obtained network resource usage information of the subscriber A and the obtained network resource usage information of the subscriber B are collected, to obtain a statistical result. Finally, based on the statistical result, the subscriber A is managed through the user plane device 205, and the subscriber B is managed through the user plane device 206. For example, when an overall network speed of a plurality of subscribers who belong to one household and who access the network needs to be limited, a network speed of the subscriber A needs to be controlled through the user plane device 205, and a network speed of the subscriber B needs to be controlled through the user plane device 206. If the network speed of the subscriber A and the network speed of the subscriber B are managed separately, it is difficult to implement coordinated management of the network speed of the subscriber A and the network speed of the subscriber B. As a result, proper network speeds cannot be allocated to the subscriber A and the subscriber B, and it is difficult for an overall network speed of the subscriber A and the subscriber B to meet a limitation requirement of a household network speed.

Therefore, it can be found that if the plurality of subscribers who belong to a same household and who access the network are managed based on different user plane devices, a management process is complex, and it is difficult to perform unified management on the plurality of subscribers who belong to the same household and who access the network.

To resolve the foregoing problem, embodiments of this application provide a method for controlling subscriber access to a network. Subscribers who belong to a same household and who access a network can be allocated to a same user plane device. The same user plane device provides a broadband network access service for the subscribers who belong to the same household and who access the network. In this way, unified management may be performed, based on one user plane device, on a plurality of subscribers who belong to a same household and who access the network, to simplify a process of managing the plurality of subscribers who belong to the same household and who access the network, and improve efficiency of managing the plurality of subscribers who belong to the same household and who access the network.

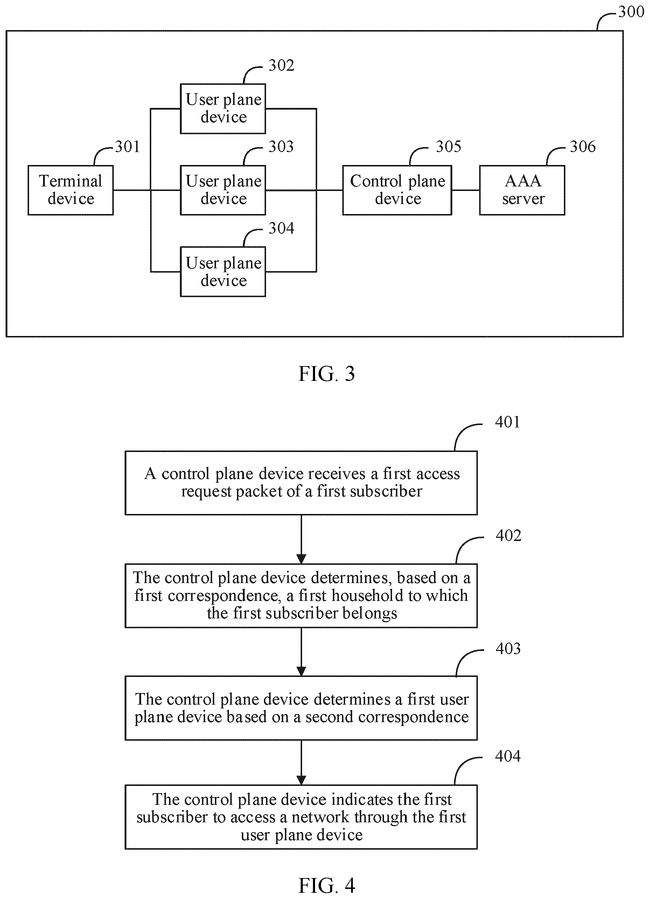

For ease of understanding, an application scenario of the method for controlling subscriber access to a network provided in embodiments of this application is first described. A subscriber can access a broadband network based on IPoE (IP over Ethernet, IP over ethernet protocol) or PPPoE (Point to Point Protocol over Ethernet, point-to-point protocol over ethernet). FIG. 3 is a schematic diagram of an architecture of a system 300 according to an embodiment of this application.

The system 300 includes a terminal device 301, a user plane device 302, a user plane device 303, a user plane device 304, a control plane device 305, and an AAA (Authentication, Authorization, Accounting server, authentication, authorization, and accounting) server 306. The terminal device 301 is a device that provides a login service for a subscriber. The terminal device 301 may be a device that supports access to a broadband network. The terminal device 301 may be a desktop computer, a notebook computer, CPE (customer-premises equipment, customer-premises equipment), an STB (set-top box, set-top box), or the like. It should be noted that a subscriber is determined based on a subscriber identifier. This is irrelevant to a device that provides the login service. The subscriber identifier may be, for example, a broadband dial-in subscriber name of the subscriber. The subscriber may log in to different devices. A plurality of subscribers may alternatively log in to a same device. The user plane device 302, the user plane device 303, the user plane device 304, and the control plane device 305 belong to a same BNG system. The user plane device 302, the user plane device 303, and the user plane device 304 may be in a VNF (Virtual Network Function, virtual network function) form. The user plane device 302, the user plane device 303, and the user plane device 304 may be vBNG-UP devices. In addition, the user plane device 302, the user plane device 303, and the user plane device 304 may alternatively be in a PNF (Physical Network Function, physical network function) form. Correspondingly, the user plane device 302, the user plane device 303, and the user plane device 304 may be pBNG-UP devices. The control plane device 305 may be in the VNF form, and is a vBNG-CP device. The AAA server 306 is a server in the network that processes a subscriber access request, provides an authentication, authorization, and accounting service.

FIG. 4 is a schematic flowchart of a method for controlling subscriber access to a network according to an embodiment of this application. The method for controlling subscriber access to a network provided in this embodiment of this application includes S401 to S404.

S401: A control plane device receives a first access request packet of a first subscriber.

With reference to FIG. 3, in this embodiment of this application, the control plane device may be the control plane device 305, and the first subscriber may log in based on the terminal device 301.

The first access request packet includes identity information of the first subscriber. The identity information of the first subscriber may include one or more of a subscriber name, a subscriber password, and an access address. The subscriber name may be a subscriber account of the first subscriber. The subscriber password may be a subscriber password used for authenticating the first subscriber. The subscriber name corresponds to the subscriber password. The access address may be MAC (Media Access Control Address, media access control address) information of a terminal device to which the subscriber logs in or VLAN (Virtual Local Area Network, virtual local area network) information of the terminal device.

In an implementation in which the subscriber accesses a broadband network based on IPoE, the first access request packet may be a DHCP (Dynamic Host Configuration Protocol, dynamic host configuration protocol) Discover packet. The DHCP Discover packet may include the identity information, for example, the subscriber name of the first subscriber and the access address of the first subscriber.

In an implementation in which the subscriber accesses the broadband network based on PPPoE, the first access request packet may be a PADI (PPPoE Active Discovery Initiation, active discovery initiation) packet. The PADI packet may include the access address of the first subscriber.

The control plane device may obtain the first access request packet through a plurality of user plane devices belonging to a same BNG system.

After obtaining the first access request packet, the control plane device may determine, based on a subscriber name or an access address in an access request packet, a first subscriber that sends the access request packet.

S402: The control plane device determines, based on a first correspondence, a first household to which the first subscriber belongs.

The first subscriber is a household subscriber and belongs to the first household. The first correspondence includes a correspondence between the first subscriber and the first household. The control plane device can determine, based on the first correspondence, that the first subscriber belongs to the first household.

The first correspondence may be obtained by the control plane device. The control plane device may obtain the first correspondence in the following two manners.

Manner 1: The control plane device obtains the first correspondence based on a configuration.

The control plane device may pre-configure a household division manner. For example, in the control plane device, the subscriber determined to log in by using an interface connected to the terminal device to which the subscriber logs in may be configured to belong to a household . For example, a subscriber that logs in to a terminal device connected by using an interface A is configured to belong to a household A, and a subscriber that logs in to the terminal device connected by using an interface B is configured to belong to a household B. In this way, the control plane device may obtain the first correspondence, that is, a correspondence between the first subscriber and the first household, based on a correspondence between the interface and the household in a configuration and based on interface information of the terminal device carried in the first access request packet.

Manner 2: The control plane device obtains the first correspondence from an authentication server.

Case 1: The control plane device obtains the first correspondence from the authentication server.

In the implementation in which the subscriber accesses the broadband network based on IPoE, after obtaining the first access request packet, the control plane device may obtain the identity information of the first subscriber in the first access request packet. The identity information may include the subscriber name of the first subscriber. The control plane device generates a subscriber authentication request message based on the identity information, and sends the subscriber authentication request message to the authentication server. After receiving the subscriber authentication request message, the authentication server authenticates the first subscriber based on the identity information included in the subscriber authentication request message, and obtains, through querying, the first household to which the first subscriber belongs. The authentication server generates a subscriber authentication response message based on an authentication result and the first household. The authentication server sends the subscriber authentication response message to the control plane device. The control plane device may obtain the first correspondence, that is, the correspondence between the first subscriber and the first household, based on the subscriber authentication response message.

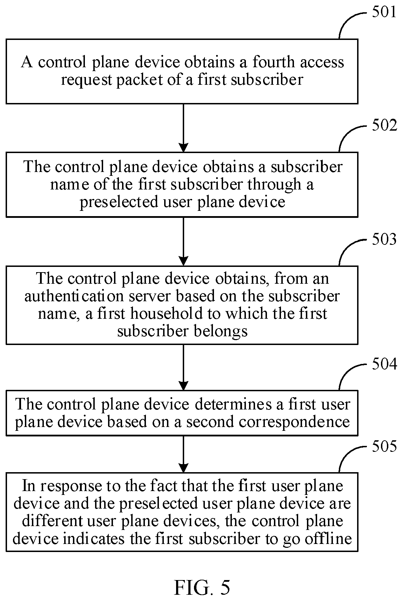

In the implementation in which the subscriber accesses the broadband network based on PPPoE, an access request packet sent by the first subscriber does not include the subscriber name of the first subscriber. The control plane device needs to interact with the first subscriber to obtain the subscriber name of the first subscriber, to obtain the first correspondence by using the subscriber name of the first subscriber. FIG. 5 is another schematic flowchart of a method for controlling subscriber access to a network according to an embodiment of this application. Specifically, the method includes the following five steps.

S501: A control plane device obtains a fourth access request packet of a first subscriber.

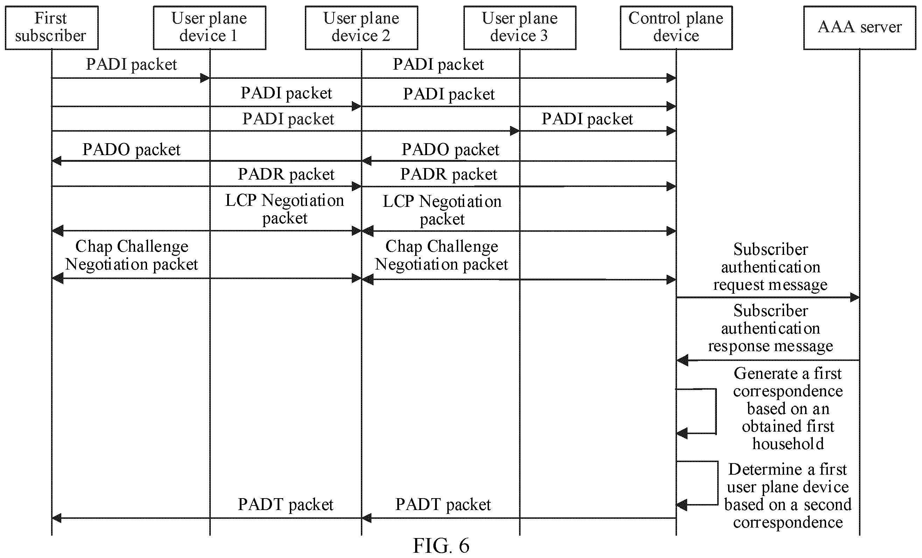

FIG. 6 is an interaction signaling diagram of a method for controlling subscriber access to a network according to an embodiment of this application. The fourth access request packet may be a PADI packet. The fourth access request packet includes an access address of the first subscriber.

In this embodiment of this application, the control plane device cannot directly determine, based on the fourth access request packet, a first household to which the first subscriber belongs. The control plane device needs to obtain a subscriber name of the first subscriber.

S502: The control plane device obtains the subscriber name of the first subscriber through a preselected user plane device.

The control plane device may first select the preselected user plane device from user plane devices belonging to a same BNG system. The control plane device obtains the subscriber name of the first subscriber through the preselected user plane device. In a possible implementation, the preselected user plane device may be determined by the control plane device based on a load status of each user plane device in a same BNG system that is controlled. The control plane device may select a user plane device with light load in one or more user plane devices that belong to the same BNG system as the preselected user plane device.

It should be noted that the preselected user plane device is a user plane device configured to implement interaction between the first subscriber and the control plane device before a first user plane device is determined.

Specifically, refer to FIG. 6. After obtaining the PADI packet, the control plane device may determine a user plane device 2 as the preselected user plane device. The control plane device sends a PADO (PPPoE Active Discovery Offer, PPPoE active discovery offer) packet to the first subscriber through the preselected user plane device. The first subscriber can determine, based on the PADO packet, to access the network through the preselected user plane device.

Then, the first subscriber sends a PADR (PPPoE Active Discovery Request, PPPoE active discovery request) packet to the control plane device through the preselected user plane device. The PADR packet includes service type information of a first subscriber request service. The control plane device establishes a PPPoE session based on the obtained PADR packet, and enters a PPPoE session stage. The control plane device further performs LCP negotiation based on LCP (Link Control Protocol, link control protocol). Specifically, the control plane device and the first subscriber may send an LCP Negotiation packet to each other through a preset user plane device, to perform LCP negotiation and establish an LCP link. The control plane device and the first subscriber may further send a Chap Challenge Negotiation packet to each other through the preset user plane device, to perform Chap authentication. The control plane device can obtain the subscriber name of the first subscriber based on the Chap Challenge Negotiation packet.

S503: The control plane device obtains, from an authentication server based on the subscriber name, the first household to which the first subscriber belongs.

The control plane device may obtain, from the authentication server based on the obtained subscriber name of the first subscriber, the first household to which the first subscriber belongs.

Specifically, refer to FIG. 6. The control plane device may generate a subscriber authentication request message. The subscriber authentication request message includes the subscriber name of the first subscriber. The authentication server may authenticate the first subscriber based on the obtained subscriber name of the first subscriber, and may obtain, through querying, the first household to which the first subscriber belongs. The authentication server generates a subscriber authentication response message based on an authentication result and the first household. The authentication server sends the subscriber authentication response message to the control plane device. The control plane device may obtain, based on the obtained subscriber authentication response message, the first household to which the first subscriber belongs.

The control plane device can determine a first correspondence based on the obtained first household to which the first subscriber belongs. The first correspondence includes a correspondence between the first subscriber and the first household. The first subscriber may be represented by using the access address in the fourth access request packet.

S504: The control plane device determines the first user plane device based on a second correspondence.

The second correspondence includes a correspondence between the first household and the first user plane device. After determining the first household to which the first subscriber belongs, the control plane device can determine, based on the second correspondence, a first user plane device that provides a network access service for the first subscriber.

S505: In response to the fact that the first user plane device and the preselected user plane device are different user plane devices, the control plane device indicates the first subscriber to go offline.

The first user plane device and the preselected user plane device may be different user plane devices. In response to the fact that the first user plane device and the preselected user plane device are different user plane devices, the control plane device needs to adjust a user plane device that provides a network service for the first subscriber. The control plane device indicates the first subscriber to go offline, so that rebroadcast is performed after the first subscriber goes offline. Specifically, refer to FIG. 6. The control plane device determines that a user plane device 1 is the first user plane device. In this case, the control plane device may send a PADT packet to the first subscriber through a candidate user plane device. After obtaining the PADT packet, the first subscriber ends the PPPoE session.

After terminating a connection to the network, the first subscriber may request to access the network again. The control plane device can obtain the access address of the first subscriber from a first access request sent by the first subscriber. The control plane device determines, based on the access address of the first subscriber and the first correspondence, the first household to which the first subscriber belongs. The control plane device may further determine the first user plane device based on the second correspondence, so that the first user plane device provides the network access service for the first subscriber.

It should be noted that when the first user plane device and the preselected user plane device are a same user plane device, the preselected user plane device does not need to be adjusted. The control plane device may indicate the first subscriber to access the network through the preselected user plane device.

It can be learned from the foregoing content that in the implementation in which the subscriber accesses the broadband network based on PPPoE, when the first subscriber goes online for the first time, the control plane device first obtains the subscriber name of the first subscriber through the preselected user plane device, determines, by using the subscriber name of the first subscriber, the first household to which the first subscriber belongs, and generates the first correspondence. Then, the control plane device indicates the first subscriber to go offline, and waits for the first subscriber to request to access the network again. When the first subscriber requests to access the network again, the control plane device may determine, based on the access address in the first access request packet, the first household to which the first subscriber belongs. The control plane device does not need to determine a preselected user plane device responsible for temporarily interacting with the first subscriber, and can directly determine the first user plane device that provides the network access service for the first subscriber.

Case 2: The control plane device obtains the first correspondence from a RADIUS attribute delivered by the authentication server.

In the implementation in which the subscriber accesses the broadband network based on IPoE, after authenticating the first subscriber by using the authentication server, the control plane device may further obtain the first correspondence based on the RADIUS (Remote Authentication Dial-In User Service, remote authentication dial-in user service) attribute delivered by the authentication server. A process of obtaining the RADIUS attribute is similar to a process in which the control plane device obtains the first correspondence from the authentication server in the implementation in which the subscriber accesses the broadband network based on IPoE in Case 1. Details are not described herein again.

In the implementation in which the subscriber accesses the broadband network based on PPPoE, after authenticating the first subscriber by using the authentication server, the control plane device may further obtain the first correspondence based on the RADIUS attribute delivered by the authentication server. A process of obtaining the RADIUS attribute is similar to a process in which the control plane device obtains the first correspondence from the authentication server in the implementation in which the subscriber accesses the broadband network based on PPPoE in Case 1. Details are not described herein again.

The authentication server may be specifically a RADIUS server. The RADIUS attribute may be an attribute related to the household to which the first subscriber belongs. Specifically, the RADIUS attribute may include HW-QoS-Profile-Name (which is an attribute name of the RADIUS attribute). HW-QoS-Profile-Name is a QoS (Quality of Service, quality of service) profile delivered by the RADIUS, and is used for configuring bandwidth of each service in a household when a household subscriber accesses the network. The RADIUS attribute may also include HW-Subscriber-QoS-Profile (which is an attribute name of the RADIUS attribute). HW-Subscriber-QoS-Profile is a household QoS profile, including a total household bandwidth limitation and a scheduling relationship between services in the household. The control plane device can obtain the first correspondence, that is, the correspondence between the first subscriber and the first household, based on the RADIUS attribute related to the household.

The control plane device may store a first household information table. The first household information table may include the first correspondence. The first subscriber may be represented by the subscriber name and/or the access address. In an example, Table 1 is a first household information table according to this embodiment of this application.

**Table 1**

| Household | Subscriber |
|---|---|
| Household identifier of a first household | Subscriber name and/or access address of a second subscriber |
| | Subscriber name and/or access address of a first subscriber |

The first household in the first household information table may be represented by using the household identifier of the first household, and the first subscriber and the second subscriber may be represented by using the subscriber name and/or the access address. The second subscriber is a subscriber who belongs to the first household and who first accesses the network.

After obtaining the first correspondence, the control plane device may store the first correspondence in the first household information table. In this way, after subsequently receiving the first access request packet and determining the first subscriber, the control plane device queries, in the first household information table, whether the first correspondence is stored. If the first household information table includes the first correspondence, the first household to which the first subscriber belongs may be determined based on the stored first correspondence.

In response to the fact that a subscriber who belongs to the first household and who accesses the network goes offline, the control plane device may delete the first household information table, to reduce occupation of storage resources of the control plane device.

It should be noted that before the first subscriber accesses the network, subscriber authentication needs to be performed on the first subscriber by using the authentication server. After authentication of the first subscriber succeeds, the control plane device controls the first subscriber to access the network.

In a manner in which the control plane device obtains the first correspondence based on a configuration and determines, by using the first correspondence stored in the first household information table, the first household to which the first subscriber belongs, it is determined, based on the first correspondence, that the first household to which the first subscriber belongs and an authentication process of the first subscriber are independent of each other. A sequence in which the control plane device determines, based on the first correspondence, the first household to which the first subscriber belongs and the control plane device sends the subscriber authentication request message to the authentication server is not limited in this embodiment of this application. For example, the control plane device first determines the first household to which the first subscriber belongs, and then sends the subscriber authentication request message to the authentication server to perform authentication. In a manner of first authenticating the first subscriber, and then determining the first household to which the first subscriber belongs, execution of determining the first household to which the first subscriber whose authentication fails can be reduced, and a process of controlling the first subscriber to access the network can be simplified.

However, for a manner in which the control plane device obtains the first correspondence from the authentication server, and determines, by using the first correspondence, the first household to which the first subscriber belongs, the control plane device first performs a subscriber authentication process, and then obtains the first correspondence from the authentication server. Then, the control plane device determines, by using the obtained first correspondence, the first household to which the first subscriber belongs.

S403: The control plane device determines the first user plane device based on the second correspondence.

The first household has a corresponding first user plane device. The first user plane device is a user plane device in a BNG system. The first user plane device is configured to provide the network access service for a subscriber belonging to the first household. In this way, it is convenient to perform, through the first user plane device, unified management on a plurality of subscribers who belong to the first household and who access the network.

The correspondence between the first household and the first user plane device is indicated by the second correspondence. The second correspondence may be pre-determined by a control device. This embodiment of this application provides a specific implementation of obtaining the second correspondence. For details, refer to the following descriptions.

After determining the first household to which the first subscriber belongs, the control plane device may determine, based on the second correspondence, a first user plane device corresponding to the first household.

In a possible implementation, the control plane device may store a second household information table. The second household information table may include the second correspondence. The first household may be represented by using the household identifier, and the first user plane device may be represented by using one or more of a device identifier of the first user plane device, a network address of the first user plane device, and an interface identifier included in the first user plane device. In an example, Table 2 is a second household information table according to this embodiment of this application.

**Table 2**

| Household | User plane device |
|---|---|
| Household identifier of a first household | Device identifier, network address, or interface identifier of a first user plane device |

In the second household information table, the first household is represented by the household identifier of the first household, and the first user plane device is represented by the device identifier, the network address, or the interface identifier.

After obtaining the second correspondence, the control plane device may store the second correspondence in the second household information table. In this way, when determining that a subscriber belongs to the first household, the control plane device may determine the first user plane device through querying the second correspondence in the second household information table.

In response to the fact that the subscriber who belongs to the first household and who accesses the network goes offline, the control plane device may delete the second household information table. Occupation of storage resources of the control plane device can be reduced. In addition, it is convenient that when a subsequent subscriber who belongs to the first household and who first accesses the network requests to access the network, the control plane device can re-determine, based on the load status of the user plane device, a user plane device that provides the network access service for the subscriber belonging to the first household, so that load of the user plane device in the BNG system is balanced.

In another possible implementation, the control plane device may further store a third household information table. The third household information table includes the first correspondence and the second correspondence. In an example, Table 3 is a third household information table according to this embodiment of this application.

**Table 3**

| Household | Subscriber | User plane device |
|---|---|---|
| Household identifier of a first household | Subscriber name and/or access address of a second subscriber | Device identifier, network address, or interface identifier of a first user plane device |
| | Subscriber name and/or access address of a first subscriber | |

In the third household information table, the first household is represented by the household identifier of the first household, the first subscriber and the second subscriber may be represented by the subscriber name and/or the access address, and the first user plane device is represented by the device identifier, the network address, or the interface identifier. The second subscriber is the subscriber who belongs to the first household and who first accesses the network. The control plane device may determine, based on a first correspondence in the third household information table, the first household to which the first subscriber belongs, and determine, based on a second correspondence in the third household information table, the first user plane device of the first household.

Similarly, in response to the fact that the subscriber who belongs to the first household and who accesses the network goes offline, the control plane device may delete the third household information table.

S404: The control plane device indicates the first subscriber to access the network through the first user plane device.

After determining the first user plane device, the control plane device indicates the first subscriber to access the network through the first user plane device.

In a possible implementation, the control plane device may send an access permission packet to the first subscriber through the first user plane device. The access permission packet carries indication information. The indication information indicates a user plane device that provides the network access service for the first subscriber. The indication information may include, for example, device information of the first user plane device. After obtaining the access permission packet, the first subscriber can determine, based on the indication information carried in the access permission packet, to access the network through the first user plane device.

It can be learned from related content of S401 to S404 that in this embodiment of this application, subscribers who belong to a same household and who access the network are allocated to a same user plane device, and the same user plane device provides the broadband network access service for the subscribers who belong to the same household and who access the network. In this way, unified management may be performed, based on one user plane device, on a plurality of subscribers who belong to a same household and who access the network, to simplify a process of managing the plurality of subscribers who belong to the same household and who access the network, and improve efficiency of managing the plurality of subscribers who belong to the same household and who access the network.

With reference to a specific application scenario, the following describes the method for controlling subscriber access to a network provided in embodiments of this application.

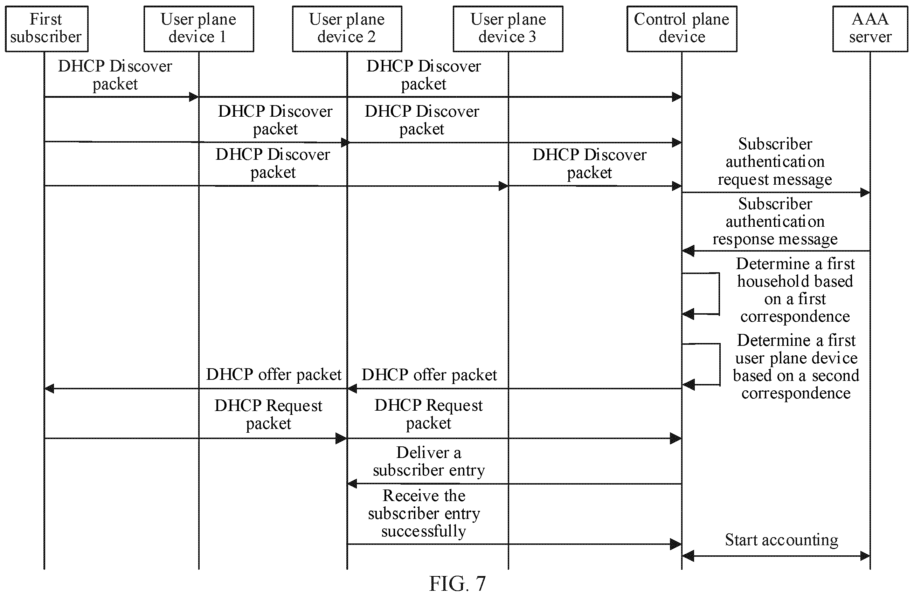

In an implementation in which a subscriber accesses a broadband network based on IPoE, FIG. 7 is another interaction signaling diagram of a method for controlling subscriber access to a network according to an embodiment of this application. A terminal device may broadcast a DHCP Discover packet, that is, a first access request packet of a first subscriber. A user plane device 1, a user plane device 2, and a user plane device 3 separately obtain the DHCP Discover packet. The user plane device 1, the user plane device 2, and the user plane device 3 separately forward the DHCP Discover packet to a control plane device.

The control plane device sends a subscriber authentication request message to an AAA server, and obtains a subscriber authentication response message fed back by the AAA server. The control plane device determines, based on the authentication response message, that authentication of the first subscriber succeeds.

The control plane device pre-stores a household information table. For the household information table, refer to Table 4.

**Table 4**

| Household identifier | Subscriber name | Access address | User plane device |
|---|---|---|---|
| Household 1 | Subscriber 1 | MAC 1/VLAN 1 | UP 2 ID/Interface 2 ID/virtual GW MAC 2 |
| | Subscriber 2 | MAC 2/VLAN 2 | |
| | Subscriber 3 | MAC 3/VLAN 3 | |

The household information table stored in the control plane device may include a first correspondence. A subscriber may be represented by the subscriber name or the access address. As shown in Table 4, "Subscriber 1", "Subscriber 2", and "Subscriber 3" are subscriber names. In the access address entry, "MAC (Media Access Control Address, media access control address) 1/VLAN (Virtual Local Area Network, virtual local area network) 1" is an access address of a subscriber corresponding to "Subscriber 1", "MAC 2/VLAN 2" is an access address of a subscriber corresponding to "Subscriber 2", and "MAC 3/VLAN 3" is an access address of a subscriber corresponding to "Subscriber 3". A household may be represented by the household identifier. As shown in Table 4, "Household 1" is the household identifier.

A subscriber name of the first subscriber is "Subscriber 2", and an access address of the first subscriber is "MAC 2/VLAN 2". The control plane device can determine, based on the first correspondence, that is, a correspondence between "Household 1" and "Subscriber 2" in Table 4, or a correspondence between "Household 1" and "MAC 2/VLAN 2", that the first subscriber belongs to a first household identified by "Household 1".

The household information table stored in the control plane device may include a second correspondence. A first user plane device may be represented by a device identifier, a network address, or an interface identifier of the first user plane device. As shown in Table 4, "UP 2 ID (Identity, identity)" is the first user plane device, that is, a device identifier of the user plane device 2 in FIG. 7. "Interface 2 (interface) ID" is an interface identifier of the first user plane device. "Virture GW (gateway, gateway) MAC 2" is a network address of the first user plane device. The control plane device determines, based on a second correspondence, that is, a correspondence between "Household 1" and "UP 2 ID", "Interface 2 ID" or "Virture GW MAC 2" in Table 4, that the first user plane device is the user plane device 2.

The control plane device sends a DHCP offer packet to the user plane device 2. The DHCP offer packet includes an IP (Internet Protocol, internet protocol) address, configuration information, a lease term, and the like that are provided for the first subscriber. The configuration information includes an address of the user plane device 2. The user plane device 2 forwards the DHCP offer packet to the first subscriber. The first subscriber may determine, based on the DHCP offer packet, to access the network through the user plane device 2.

The first subscriber sends a DHCP Request packet to the control plane device through the user plane device 2. The DHCP Request packet indicates a server that is selected by the first subscriber and an IP address that the first subscriber expects to use.

After obtaining the DHCP Request packet, the control plane device delivers the subscriber entry to the user plane device 2 by using a Sci interface. The Sci interface is a control interface between the control plane device and the user plane device 2, and uses CUSP (Control Plane and User Plane Separated Protocol, control plane and user plane separated protocol). The subscriber entry includes subscriber information related to the first subscriber accessing the network.

After obtaining the subscriber entry, the user plane device 2 replies to the control plane device by using the Sci interface that the subscriber entry is received successfully.

The control plane device interacts with an authentication server and starts accounting.

Then, the control plane device sends the DHCP Response packet to the first subscriber through the user plane device 2. The DHCP Response packet indicates that the first subscriber may use an IP address requested to be allocated.

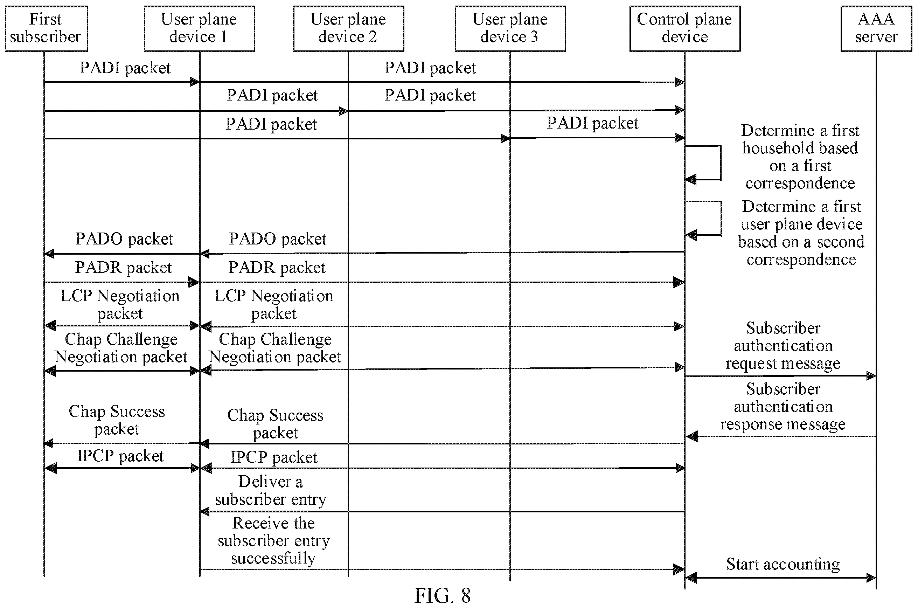

In an implementation in which a subscriber accesses a broadband network based on PPPoE, FIG. 8 is still another interaction signaling diagram of a method for controlling subscriber access to a network according to an embodiment of this application. A terminal device may broadcast a PADI packet, that is, a first access request packet of a first subscriber. A user plane device 1, a user plane device 2, and a user plane device 3 separately obtain the PADI packet. The user plane device 1, the user plane device 2, and the user plane device 3 separately forward the PADI packet to a control plane device.

The control plane device pre-stores a household information table. For the household information table, refer to Table 5.

**Table 5**

| Household identifier | Subscriber name | Access address | User plane device |
|---|---|---|---|
| Household 1 | Subscriber 1 | MAC 1/VLAN 1 | UP 1 ID |
| | Subscriber 2 | MAC 2/VLAN 2 | |
| | Subscriber 3 | MAC 3/VLAN 3 | |

The household information table stored in the control plane device may include a first correspondence. A subscriber may be represented by the subscriber name or the access address. As shown in Table 5, "Subscriber 1", "Subscriber 2", and "Subscriber 3" are subscriber names. In the access address entry, "MAC 1/VLAN 1" is an access address of a subscriber corresponding to "Subscriber 1", "MAC 2/VLAN 2" is an access address of a subscriber corresponding to "Subscriber 2", and MAC 3/VLAN 3 is an access address of a subscriber corresponding to "Subscriber 3". A household may be represented by the household identifier. As shown in Table 5, "Household 1" is the household identifier.

A subscriber name of the first subscriber is "Subscriber 2", and an access address of the first subscriber is "MAC 2/VLAN 2". Based on the access address, that is, "MAC 2/VLAN 2", that is of the first subscriber and that is included in the obtained first access request packet, the control plane device may obtain the first correspondence through querying the household information table, that is, a correspondence between "Household 1" and "MAC 2/VLAN 2" in Table 5. The control plane device can determine, based on the first correspondence, that the first subscriber belongs to a first household represented by "Household 1".

The control plane device determines, based on the first correspondence, a first household to which the first subscriber belongs. The first correspondence is obtained by the control plane device according to the method shown in FIG. 5.

The household information table stored in the control plane device may include a second correspondence. A first user plane device may be represented by a device identifier of the first user plane device. As shown in Table 5, "UP 1 ID" is the device identifier of the first user plane device. "Household 1" and "UP 1 ID" are the second correspondence included in Table 5. The control plane device determines the first user plane device based on the second correspondence. In this embodiment of this application, the first user plane device may be, for example, the user plane device 1.

The control plane device sends a PADO packet to the first subscriber through the user plane device 1. The first subscriber can determine, based on the PADO packet, to access the network through the user plane device 1.

Then, the first subscriber sends the PADR packet to the control plane device through the user plane device 1. The PADR packet includes service type information of a first subscriber request service. The control plane device establishes a PPPoE session based on the obtained PADR packet, and enters a PPPoE session stage.

The control plane device and the first subscriber send an LCP Negotiation packet to each other through the user plane device 1, to perform LCP negotiation and establish an LCP link. Then, the control plane device and the first subscriber send a Chap Challenge Negotiation packet to each other through the user plane device 1, to perform Chap authentication. The control plane device can obtain the subscriber name of the first subscriber based on the Chap Challenge Negotiation packet.

The control plane device generates a subscriber authentication request message, and the subscriber authentication request message includes the subscriber name of the first subscriber. The control plane device sends a subscriber authentication request to an authentication server. The authentication server performs subscriber authentication on the first subscriber based on the subscriber name of the first subscriber in the subscriber authentication request message, and generates a subscriber authentication response based on an authentication result. The authentication server sends the subscriber authentication response to the control plane device.

The control plane device generates a Chap Success packet based on an authentication result indicating that authentication succeeds in the subscriber authentication response. The Chap Success packet indicates that authentication of the first subscriber succeeds. The control plane device sends the Chap Success packet to the first subscriber through the user plane device 1.

The first subscriber and the control plane device send an IPCP (IP control protocol, IP Control Protocol) packet to each other through the user plane device 1. The first subscriber may determine, based on the IPCP packet, an allocated IP address. The control plane device sends a subscriber entry to the user plane device 1. The subscriber entry includes subscriber information of the first subscriber. The user plane device 1 replies to the control plane device, that the subscriber entry is received successfully. The control plane device interacts with the authentication server and starts accounting.

In the foregoing embodiment, the first subscriber is a subscriber, in one or more household subscribers of the first household, who does not first access the network. The control plane device has obtained the second correspondence between the first household and the first user plane device. In a possible implementation, the control plane device may obtain the second correspondence based on a subscriber who belongs to the first household and who first accesses the network.

The following describes a manner in which the control plane device obtains the second correspondence. The manner includes the following four steps.

A1: The control plane device receives a second access request packet of a second subscriber.

The second subscriber is the subscriber who belongs to the first household and who first accesses the network, that is, a subscriber that belongs to the first household and that requests to access the network.

The control plane device receives the second access request packet of the second subscriber, and allocates, to the second subscriber, a user plane device that provides a network access service.

A2: The control plane device determines, based on a third correspondence, the first household to which the second subscriber belongs.

The third correspondence includes a correspondence between the second subscriber and the first household. A manner in which the control plane device obtains the third correspondence is similar to a manner in which the control plane device obtains the first correspondence. For details, refer to the foregoing descriptions. Details are not described herein again.

A3: The control plane device determines the first user plane device from a first candidate user plane device set.

The second subscriber is the subscriber who belongs to the first household and who first accesses the network. The control plane device does not determine a first user plane device corresponding to the first household. The control plane device needs to select, as the first user plane device, a user plane device from the first candidate user plane device set. The first candidate user plane device set includes at least one user plane device that belongs to a same BNG system as the control plane device.

In a possible implementation, the control plane device determines the first user plane device based on a load parameter of the first user plane device in the first candidate user plane device set. The load parameter of the user plane device indicates a load status of the user plane device. Specifically, the control plane device may obtain a load parameter of each user plane device in the first candidate user plane device set, and then select a user plane device with light load as the first user plane device, so that load of each user plane device is balanced.

A4: The control plane device generates the second correspondence based on the first household and the first user plane device.

The control plane device generates, based on the first household to which the second subscriber belongs and the determined first user plane device, the second correspondence including the correspondence between the first household and the first user plane device.

The control plane device may determine, based on the generated second correspondence, a first user plane device that provides the network access service for a subscriber who belongs to the first household and who accesses the network. After generating the second correspondence, the control plane device may indicate, based on the second correspondence, a subscriber who belongs to the first household and who does not first access the network, to access the network through the first user plane device. In this way, a plurality of subscribers who belong to the first household and who access the network can access the network through the first user plane device, so that the plurality of subscribers who belong to the first household and who access the network are conveniently managed.

The control plane device can allocate corresponding user plane devices to subscribers who belong to different households and who access the network. The following describes a process in which the control plane device allocates a second user plane device to a subscriber, that is, a third subscriber, who belongs to a second household and who first accesses the network.

B1: The control plane device receives a third access request packet of the third subscriber.

The third access request packet includes identity information of the third subscriber. The control plane device may determine, based on the third access request packet, a third subscriber that sends the third access request packet.

The third subscriber may be determined based on a subscriber name of the third subscriber or an access address of the third subscriber included in the third access request packet. A manner of determining the third subscriber is similar to a manner of determining the first subscriber. For details, refer to the foregoing descriptions. Details are not described herein again.

B2: The control plane device determines, based on a fourth correspondence, a second household to which the third subscriber belongs.

The fourth correspondence includes a correspondence between the third subscriber and the second household. A manner in which the control plane device obtains the fourth correspondence is similar to a manner of obtaining the first correspondence. For details, refer to the foregoing descriptions. Details are not described herein again.

The control plane device determines, based on the fourth correspondence, the second household to which the third subscriber belongs. The third subscriber is the subscriber who belongs to the second household and who first accesses the network.

B3: The control plane device determines the second user plane device from a second candidate user plane device set.

The control plane device needs to allocate the second user plane device to a subscriber who belongs to the second household and who accesses the network. The control plane device determines the second user plane device from the second candidate user plane device set. The second candidate user plane device set includes at least one user plane device that belongs to a same BNG system as the control plane device. In a possible implementation, the control plane device may determine the second user plane device based on a load parameter of the second user plane device in the second candidate user plane device set. For example, the control plane device may select a user plane device with light load in one or more user plane devices that are included in the second candidate user plane device set as the second user plane device.

B4: The control plane device indicates the third subscriber to access the network through the second user plane device.

A process in which the control plane device indicates the third subscriber to access the network through the second user plane device is similar to a process in which the control plane device indicates the first subscriber to access the network through the first user plane device. For specific descriptions, refer to the foregoing descriptions. Details are not described herein again.

Further, the control plane device can establish a fifth correspondence based on the determined second user plane device. The fifth correspondence includes a correspondence between the second household and the second user plane device. The control plane device may use, based on the fifth correspondence, the second user plane device as a user plane device that provides the network access service for the subscriber who belongs to the second household and who accesses the network. In this way, unified management can be performed through the second user plane device on a plurality of subscribers who belong to the second household and who access the network.

In an example, in an implementation in which a subscriber accesses a broadband network based on IPoE, the control plane device may write the obtained fourth correspondence and the established fifth correspondence into the household information table. An embodiment of this application provides another household information table based on Table 4, as shown in Table 6.

**Table 6**

| Household identifier | Subscriber name | Access address | User plane device |
|---|---|---|---|
| Household 1 | Subscriber 1 | MAC 1/VLAN 1 | UP 2 ID/Interface 2 ID/Virture GW MAC 2 |
| | Subscriber 2 | MAC 2/VLAN 2 | |
| | Subscriber 3 | MAC 3/VLAN 3 | |
| Household 2 | Subscriber 4 | MAC 4/VLAN 4 | UP 3 ID/Interface 3 ID/Virture GW MAC 3 |

Table 6 is a household information table in which the fourth correspondence and the fifth correspondence are written based on Table 4. The subscriber may be represented by the subscriber name or the access address. As shown in Table 6, "Subscriber 4" is the subscriber name of the third subscriber. "MAC 4/VLAN 4" is the access address of the third subscriber. "Household 2" indicates a household identifier of the second household. "UP 3 ID" is a device identifier of the second user plane device. "Interface 3 ID" is an interface identifier of the second user plane device. "Virture GW MAC 3" is a network address of the second user plane device. The fourth correspondence is a correspondence between "Household 2" and "Subscriber 4" or a correspondence between "Household 2" and "MAC 4/VLAN 4". The fifth correspondence is a correspondence between "Household 2" and "UP 3 ID", "Interface 3 ID", or "Virture GW MAC 3". In another implementation, in the implementation in which the subscriber accesses the broadband network based on PPPoE, the control plane device may write the obtained fourth correspondence and the established fifth correspondence into the household information table. The household information table shown in Table 5 is used as an example. An embodiment of this application provides still another household information table, as shown in Table 7.

**Table 7**

| Household identifier | Subscriber name | Access address | Subscriber name device |
|---|---|---|---|
| Household 1 | Subscriber 1 | MAC 1/VLAN 1 | UP 1 ID |
| | Subscriber 2 | MAC 2/VLAN 2 | |
| | Subscriber 3 | MAC 3/VLAN 3 | |
| Household 2 | Subscriber 4 | MAC 4/VLAN 4 | UP 2 ID |

Table 7 is a household information table in which the fourth correspondence and the fifth correspondence are written based on Table 5. The subscriber may be represented by the subscriber name or the access address. As shown in Table 7, "Subscriber 4" is the subscriber name of the third subscriber. "MAC 4/VLAN 4" is the access address of the third subscriber. "Household 2" indicates the household identifier of a second household. "UP 2 ID" is the device identifier of the second user plane device. The fourth correspondence is a correspondence between "Household 2" and "Subscriber 4" or a correspondence between "Household 2" and "MAC 4/VLAN 4". The fifth correspondence is a correspondence between "Household 2" and "UP ID".

In a running process of the first user plane device, a fault or heavy load may occur. For such a case, the control plane device may hand over, to another user plane device, a subscriber who belongs to one household and who accesses the network through the first user plane device. Specifically, the following two steps are included.

C 1: In response to the fact that the first user plane device meets a preset handover condition, the control plane device adjusts the second correspondence.

The preset handover condition is a handover condition of performing handover from a first user plane to another user plane device. For example, the preset handover condition may include: The first user plane device is faulty. For another example, the preset handover condition includes: A load parameter of the first user plane device exceeds a load threshold.

In response to the fact that the first user plane device meets the preset handover condition, the control plane device needs to re-determine a user plane device that provides the network access service for a subscriber who belongs to the first household and who accesses the network. The control plane device determines a third user plane device as a user plane device that is responsible for providing the network access service for the subscriber who belongs to the first household and who accesses the network. The third user plane device may be a user plane device with light load in one or more user plane devices that belong to a same BNG system as the control plane device. The third user plane device may be a user plane device other than the first user plane device in a BNG system. The control plane device adjusts the second correspondence based on the determined third user plane device. An adjusted second correspondence includes a correspondence between the first household and the third user plane device.

C2: The control plane device indicates, based on the adjusted second correspondence, each subscriber who belongs to the first household and who accesses the network to access the network through the third user plane device.

The control plane device hands over, based on the adjusted second correspondence, a subscriber who belongs to the first household and who accesses the network through the first user plane device to the subscriber who accesses the network through the third user plane device. The control plane device migrates a subscriber that belongs to a same household and accesses the network. After the migration, the subscriber that belongs to the same household and accesses the network still accesses the network through a same user plane device, that is, the third user plane device.

An example in which the control plane device indicates the first subscriber to access the network through the third user plane device is used. The control plane device sends a subscriber entry of the first subscriber to the third user plane device. The third user plane device publishes a subscriber route of the first subscriber based on the obtained subscriber entry of the first subscriber. The third user plane device sends an ARP (Address Resolution Protocol, address resolution protocol) packet, so that the first subscriber interacts with another device in the network through the third user plane device.

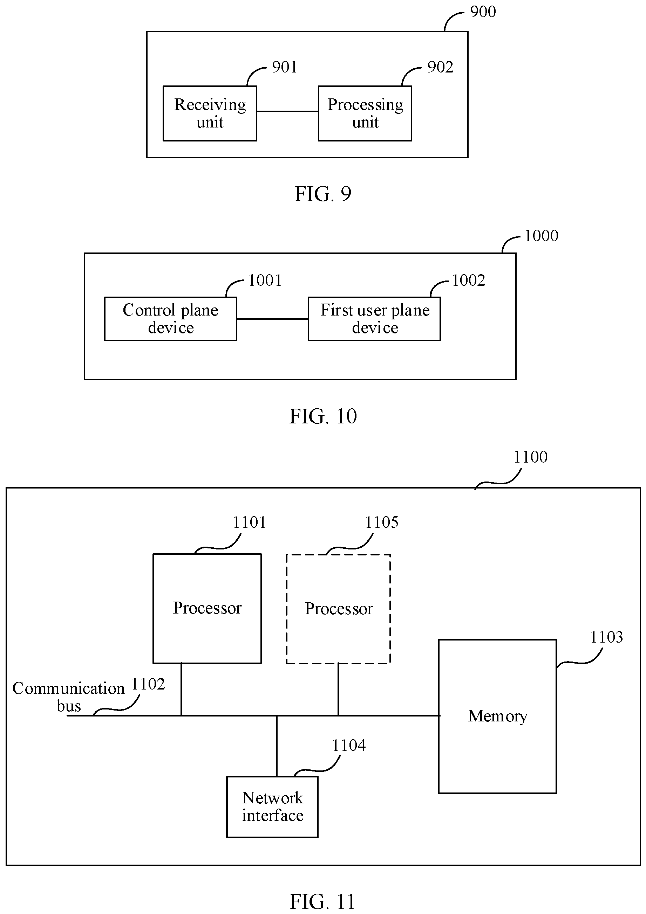

FIG. 9 is a schematic flowchart of a structure of an apparatus for controlling subscriber access to a network according to an embodiment of this application. The apparatus for controlling subscriber access to a network can implement a function of the control plane device in the foregoing method examples. Refer to FIG. 9. The apparatus 900 for controlling subscriber access to a network includes a receiving unit 901 and a processing unit 902. The receiving unit 901 is configured to support the apparatus 900 for controlling subscriber access to a network in performing S401 in FIG. 4. The processing unit 902 is configured to support the apparatus 900 for controlling subscriber access to a network in performing S402 to S404 in FIG. 4, and another process performed by the control plane device in the technology described in this specification. For example, the receiving unit 901 is configured to perform various receiving operations performed by the control plane device in the foregoing method embodiments. The processing unit 902 is configured to perform various processing operations of the control plane device in the foregoing method embodiments. For example, the receiving unit 901 is further configured to receive a second access request packet of a second subscriber. The processing unit 902 is further configured to determine, based on a third correspondence, a first household to which the second subscriber belongs, where the third correspondence includes a correspondence between the second subscriber and the first household. A first user plane device is determined from a first candidate user plane device set, where the first candidate user plane device set includes at least one user plane device in a BNG system. A second correspondence is generated based on the first household and the first user plane device. For a specific execution process, refer to the detailed descriptions of corresponding steps in the embodiment shown in any one of FIG. 4 to FIG. 8. Details are not described herein again.

It should be noted that, in embodiments of this application, division into the units is an example, and is merely a logical function division. In actual implementation, another division manner may be used. Functional units in embodiments of this application may be integrated into one processing unit, each of the units may exist alone physically, or two or more units are integrated into one unit. For example, in the foregoing embodiment, an obtaining unit and the processing unit may be a same unit or different units. The integrated unit may be implemented in a form of hardware, or may be implemented in a form of a software functional unit.

FIG. 10 is a schematic flowchart of a structure of a system for controlling subscriber access to a network according to an embodiment of this application. The system 1000 for controlling subscriber access to a network is used in the method for controlling subscriber access to a network in the foregoing method embodiment. The system 1000 for controlling subscriber access to a network includes a control plane device 1001 and a first user plane device 1002. The control plane device 1001 may implement a function of the control plane device in the embodiment shown in any one of FIG. 4 to FIG. 8. The first user plane device 1002 may implement a function of the first user plane device in the embodiment shown in any one of FIG. 4 to FIG. 8. For a specific execution process, refer to the detailed descriptions of corresponding steps in the embodiment shown in any one of FIG. 4 to FIG. 8. Details are not described herein again.

Optionally, the system 1000 for controlling subscriber access to a network may further include a second user plane device. The second user plane device is configured to provide the network access service for the subscriber who belongs to the second household and who accesses the network in the foregoing embodiments. For details, refer to the foregoing descriptions. Details are not described herein again.

Optionally, the system 1000 for controlling subscriber access to a network may further include a third user plane device. The third user plane device is adjusted by the control plane device to provide a network access service for a subscriber who belongs to the first household and who accesses the network after the first user plane device meets a preset handover condition. For details, refer to the foregoing embodiments. Details are not described herein again.

FIG. 11 is a schematic diagram of a structure of a control plane device according to an embodiment of this application. The foregoing control plane device may be implemented through the control plane device shown in FIG. 11. Refer to FIG. 11. The control plane device 1100 includes at least one processor 1101, a communication bus 1102, and at least one network interface 1104. Optionally, the control plane device 1100 may further include a memory 1103.

The processor 1101 may be a central processing unit (central processing unit, CPU), a network processor (network processor, NP), or a combination of a CPU and an NP. In an implementation, the processor 1101 may alternatively be a traffic management (traffic management, TM) chip or hardware integrating the NP and a TM chip. The TM chip or the hardware integrating the NP and the TM chip may perform the method for queue scheduling provided in embodiments of this application on a queue in the TM chip. The processor 710 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The processor may be configured to determine a user plane device that provides a network access service for a subscriber, to implement the method for controlling subscriber access to a network provided in embodiments of this application.

For example, when the control plane device in FIG. 4 is implemented through the device shown in FIG. 11, the processor may be configured to: receive a first access request packet of a first subscriber; determine, based on a first correspondence, a first household to which the first subscriber belongs; determine, based on a second correspondence, a first user plane device; and indicate the first subscriber to access the network through the first user plane device. For specific function implementation, refer to a processing part of the corresponding control plane device in the method embodiments.

The communication bus 1102 is configured to communicate information between the processor 1101, the network interface 1104, and the memory 1103. The bus system 1102 may be a peripheral component interconnect standard (peripheral component interconnect, PCI) bus, an extended industry standard architecture (extended industry standard architecture, EISA) bus, or the like. The bus system 1102 may be classified into an address bus, a data bus, a control bus, and the like. The bus system 1102 is represented by using merely one thick line in FIG. 11, but it does not mean that there is merely one bus or merely one type of bus.

The memory 1103 may be a read-only memory (read-only memory, ROM) or another type of static storage device that may store static information and instructions. The memory 1103 may alternatively be a random access memory (random access memory, RAM) or another type of dynamic storage device that may store information and instructions, or may be a compact disc read-only memory (compact disc read-only Memory, CD-ROM) or another optical disc storage, an optical disc storage (including a compact disc, a laser disc, an optical disc, a digital versatile disc, a Blu-ray disc, and the like), a disk storage medium or another magnetic storage device, or any other medium that can be configured to carry or store expected program code in a form of instructions or a data structure and that can be accessed by a computer. However, the memory is not limited thereto. The memory 1103 may exist independently, and is connected to the processor 1101 by using the communication bus 1102. The memory 1103 may alternatively be integrated with the processor 1101.

Optionally, the memory 1103 is configured to store program code or instructions for executing the solutions of this application, and the processor 1101 controls the execution. The processor 1101 is configured to execute the program code or the instructions stored in the memory 1103. The program code may include one or more software modules. Optionally, the processor 1101 may alternatively store the program code or the instructions for executing the solutions of this application. In this case, the processor 1101 does not need to read the program code or the instructions from the memory 1103.

The network interface 1104 may be an apparatus such as a transceiver, and is configured to communicate with another device or a communication network. The communication network may be the Ethernet, a radio access network (RAN), a wireless local area network (wireless local area network, WLAN), or the like. In this embodiment of this application, the network interface 1104 may be configured to receive a packet sent by another node in a segment routing network, or may send a packet to another node in the segment routing network. The network interface 1104 may be an Ethernet (ethernet) interface, a fast Ethernet (fast ethernet, FE) interface, a gigabit Ethernet (gigabit ethernet, GE) interface, or the like.

During specific implementation, in an embodiment, the device 1100 may include a plurality of processors, for example, the processor 1101 and a processor 1107 shown in FIG. 11. Each of the processors may be a single-core (single-CPU) processor, or may be a multi-core (multi-CPU) processor. The processor herein may be one or more devices, circuits, and/or processing cores configured to process data (for example, computer program instructions).

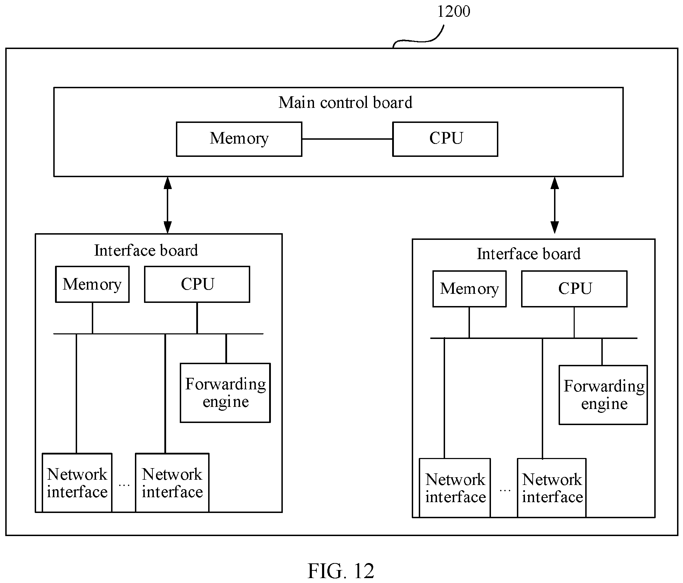

FIG. 12 is a schematic diagram of a structure of a device 1200 according to an embodiment of this application. The control plane device designed in embodiments of this application may be implemented through the device shown in FIG. 12.

Refer to the schematic diagram of the structure of the device shown in FIG. 12. The device 1200 includes a main control board and one or more interface boards. The main control board is communicatively connected to the interface board. The main control board is also referred to as a main processing unit (main processing unit, MPU) or a route processor card (route processor card). The main control board includes a CPU and a memory, and is responsible for controlling and managing each component in the device 1200, including functions of route computation, and device management, and maintenance. The interface board is also referred to as a line processing unit (line processing unit, LPU) or a line card (line card), and is configured to receive and send a packet.

In some embodiments, the main control board communicates with the interface board through a bus, or the interface boards communicate with each other through a bus. In some embodiments, the interface boards communicate with each other through a switching board. In this case, the device 1200 also includes a switching board. The switching board is communicatively connected to the main control board and the interface boards, and is configured to forward data between the interface boards. The switching board may also be referred to as a switch fabric unit (switch fabric unit, SFU). The interface board includes a CPU, a memory, a forwarding engine, and an interface card (interface card, IC). The interface card may include one or more network interfaces. The network interface may be an Ethernet interface, an FE interface, a GE interface, or the like. The CPU is communicatively connected to the memory, the forwarding engine, and the interface card. The memory is configured to store a forwarding table. The forwarding engine is configured to forward a received packet based on the forwarding table stored in the memory. If a destination address of the received packet is an IP address of the device 1200, the forwarding engine sends the packet to the CPU of the main control board or the CPU of the interface board for processing. If a destination address of the received packet is not an IP address of the device 1200, the forwarding engine searches the forwarding table based on the destination address. If a next hop and an outbound interface that correspond to the destination address are found from the forwarding table, the forwarding engine forwards the packet to the outbound interface corresponding to the destination address. The forwarding engine may be a network processor (network processor, NP). The interface card, also referred to as a subcard, may be installed on the interface board. The interface card is responsible for converting an optical/electrical signal into a data frame, checking validity of the data frame, and forwarding the data frame to the forwarding engine for processing or the CPU of the interface board. In some embodiments, the CPU may also perform a function of the forwarding engine, for example, implement software forwarding based on a general-purpose CPU, so that no forwarding engine is needed in the interface board. In some embodiments, the forwarding engine may be implemented by using an ASIC or a field programmable gate array (field programmable gate array, FPGA). In some embodiments, the memory that stores the forwarding table may alternatively be integrated into the forwarding engine, and is used as a part of the forwarding engine.

An embodiment of this application further provides a chip system, including a processor. The processor is coupled to a memory, and the memory is configured to store a program or instructions. When the program or the instructions are executed by the processor, the chip system is enabled to implement the method for controlling subscriber access to a network provided in the embodiment shown in any one of FIG. 4 to FIG. 8.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be an FPGA, an ASIC, a system on chip (system on chip, SoC), a CPU, an NP, a digital signal processor (digital signal processor, DSP), a microcontroller (micro controller unit, MCU), a programmable logic device (programmable logic device, PLD), or another integrated chip.

It should be understood that the steps in the foregoing method embodiments may be completed by using an integrated logic circuit in a form of hardware or instructions in a form of software in the processor. The steps of the methods disclosed with reference to embodiments of this application may be directly performed by a hardware processor, or may be performed by a combination of hardware in the processor and a software module.

An embodiment of this application further provides a computer-readable storage medium, including instructions. When the instructions are run on a computer, the computer is enabled to perform the method for controlling subscriber access to a network that is provided by the foregoing method embodiments and that is performed by a network device or a server.

An embodiment of this application further provides a computer program product, including instructions. When the computer program product runs on a computer, the computer is enabled to perform the method for controlling subscriber access to a network that is provided by the foregoing method embodiments and that is performed by a network device or a server.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in a proper circumstance, so that embodiments described herein can be implemented in other orders than the order illustrated or described herein. In addition, the terms "include", "have", and any variant are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a specific working process of the foregoing system, apparatus, and unit, refer to a corresponding process in the foregoing method embodiments. Details are not described herein again.

In the embodiments provided in this application, it should be understood that the disclosed system, apparatus, and method may be implemented in another manner. For example, the described apparatus embodiments are merely examples. For example, division into the units is merely logical module division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate components may or may not be physically separate, and components displayed as units may or may not be physical units. To be specific, the components may be located at one position, or may be distributed on a plurality of network units. Some or all of the units may be obtained based on actual requirements to achieve the objectives of the solutions of embodiments.

In addition, module units in embodiments of this application may be integrated into one processing unit, each of the units may exist alone physically, or two or more units are integrated into one unit. The integrated unit may be implemented in a form of hardware, or may be implemented in a form of a software module unit.

When the integrated unit is implemented in the form of a software module unit and sold or used as an independent product, the integrated unit may be stored in a computer-readable storage medium. Based on such an understanding, the technical solutions of this application essentially, or the part contributing to a current technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk drive, a read-only memory (ROM, Read-Only Memory), a random access memory (RAM, Random Access Memory), a magnetic disk, or an optical disc.

A person skilled in the art should be aware that in the foregoing one or more examples, functions described in the present invention may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communications medium, where the communications medium includes any medium that enables a computer program to be transmitted from one place to another. The storage medium may be any available medium accessible to a general-purpose computer or a dedicated computer.

The objectives, technical solutions, and beneficial effects of the present invention are further described in detail in the foregoing specific implementations. It should be understood that the foregoing descriptions are merely specific implementations of the present invention.

In conclusion, the foregoing embodiments are merely intended for describing the technical solutions of this application, but not for limiting this application. Although this application is described in detail with reference to the foregoing embodiments, a person of ordinary skill in the art should understand that the technical solutions described in the foregoing embodiments may still be modified, or some technical features thereof may be equivalently replaced. However, these modifications or replacements do not cause the essence of the corresponding technical solutions to depart from the scope of the technical solutions in embodiments of this application.

## Claims

1. A method for controlling subscriber access to a network, wherein a broadband network gateway BNG system in the network comprises a control plane device and at least two user plane devices, and the method comprises:
receiving, by the control plane device, a first access request packet of a first subscriber;
determining, by the control plane device based on a first correspondence, a first household to which the first subscriber belongs, wherein the first correspondence comprises a correspondence between the first subscriber and the first household;
determining, by the control plane device, a first user plane device based on a second correspondence, wherein the second correspondence comprises a correspondence between the first household and the first user plane device, and the first user plane device is one of the at least two user plane devices in the BNG system; and
indicating, by the control plane device, the first subscriber to access the network through the first user plane device.

2. The method according to claim 1, wherein before the receiving, by the control plane device, a first access request packet of a first subscriber, the method further comprises:
obtaining, by the control plane device, the second correspondence based on a second subscriber, wherein the second subscriber is a subscriber who belongs to the first household and who first accesses the network.

3. The method according to claim 2, wherein the second correspondence is obtained in the following manner:
receiving, by the control plane device, a second access request packet of the second subscriber;
determining, by the control plane device based on a third correspondence, the first household to which the second subscriber belongs, wherein the third correspondence comprises a correspondence between the second subscriber and the first household;
determining, by the control plane device, the first user plane device from a first candidate user plane device set, wherein the first candidate user plane device set comprises at least one user plane device in the BNG system; and
generating, by the control plane device, the second correspondence based on the first household and the first user plane device.

4. The method according to claim 3, wherein the determining, by the control plane device, the first user plane device from a first candidate user plane device set comprises:
determining, by the control plane device, the first user plane device from the first candidate user plane device set based on a load parameter of the first user plane device.

5. The method according to any one of claims 1 to 4, wherein the method further comprises:
receiving, by the control plane device, a third access request packet of a third subscriber;
determining, by the control plane device based on a fourth correspondence, a second household to which the third subscriber belongs, wherein the fourth correspondence comprises a correspondence between the third subscriber and the second household, and the third subscriber is a subscriber who belongs to the second household and who first accesses the network;
determining, by the control plane device, the second user plane device from a second candidate user plane device set, wherein the second candidate user plane device set comprises at least one user plane device in the BNG system; and
indicating, by the control plane device, the third subscriber to access the network through the second user plane device.

6. The method according to claim 5, wherein the method further comprises:
establishing, by the control plane device, a fifth correspondence based on the second household and the second user plane device, wherein the fifth correspondence comprises a correspondence between the second household and the second user plane device, and the fifth correspondence is used for determining a user plane device that provides a network access service for a subscriber who belongs to the second household and who accesses the network.

7. The method according to any one of claims 1 to 6, wherein the first correspondence is obtained by the control plane device based on a configuration, or the first correspondence is obtained by the control plane device from an authentication server.

8. The method according to any one of claims 1 to 7, wherein the first subscriber is determined based on a subscriber name comprised in the first access request packet, and the subscriber name identifies the first subscriber.

9. The method according to any one of claims 1 to 7, wherein the first subscriber is determined based on an access address of the first subscriber comprised in the first access request packet.

10. The method according to any one of claims 1 to 6, wherein before the receiving, by the control plane device, a first access request packet of a first subscriber, the method further comprises:
obtaining, by the control plane device, a fourth access request packet of the first subscriber;
obtaining, by the control plane device, a subscriber name of the first subscriber through a preselected user plane device, wherein the preselected user plane device is one of the at least two user plane devices in the BNG system;
obtaining, by the control plane device from an authentication server based on the subscriber name, the first household to which the first subscriber belongs;
determining, by the control plane device, the first user plane device based on the second correspondence; and
in response to the fact that the first user plane device and the preselected user plane device are different user plane devices, indicating, by the control plane device, the first subscriber to go offline.

11. The method according to any one of claims 1 to 10, wherein the method further comprises:
in response to the fact that the first user plane device meets a preset handover condition, adjusting, by the control plane device, the second correspondence, wherein an adjusted second correspondence comprises a correspondence between the first household and a third user plane device, and the third user plane device is different from the first user plane device; and
indicating, by the control plane device based on the adjusted second correspondence, a subscriber in the first household to access the network through the third user plane device.

12. The method according to any one of claims 1 to 11, wherein the control plane device stores a household information table, and the household information table comprises the first correspondence and/or the second correspondence.

13. The method according to any one of claims 1 to 12, wherein the method further comprises:
in response to the fact that all subscribers who belong to the first household and who access the network go offline, deleting, by the control plane device, the second correspondence.

14. A system for controlling subscriber access to a network, wherein the system comprises a control plane device and a first user plane device, and the control plane device and the first user plane device belong to a same BNG system, wherein
the control plane device is configured to: receive a first access request packet of a first subscriber; determine, based on a first correspondence, a first household to which the first subscriber belongs; determine, based on a second correspondence, the first user plane device; and indicate the first subscriber to access the network through the first user plane device, wherein the first correspondence comprises a correspondence between the first subscriber and the first household, and the second correspondence comprises a correspondence between the first household and the first user plane device; and
the first user plane device is configured to enable the first subscriber to access the network.

15. A control plane device, wherein the control plane device comprises a processor chip and a memory, the memory is configured to store instructions or program code, and the processor chip is configured to invoke, from the memory, and run the instructions or the program code, to perform the method for controlling subscriber access to a network according to any one of claims 1 to 13.

16. A broadband network gateway BNG system, wherein the system comprises a control plane device and at least two user plane devices, and the control plane device is configured to perform the method according to any one of claims 1 to 13.

17. A computer-readable storage medium, comprising program instructions, wherein when the program instructions are executed on a computer, the computer is enabled to perform the method for controlling subscriber access to a network according to any one of claims 1 to 13.

18. A computer program product, wherein when the computer program product runs on a network device, the network device is enabled to perform the method for controlling subscriber access to a network according to any one of claims 1 to 13.
